(19) **Europäisches Patentamt**

**European Patent Office**

**Office européen des brevets**

(11) Numéro de publication : **0 429 426 B1**

(12) **FASCICULE DE BREVET EUROPEEN**

(45) Date de publication du fascicule du brevet :
16.12.92 Bulletin 92/51

(51) Int. Cl.⁵ : **F16L 11/12**

(21) Numéro de dépôt : **90870215.2**

(22) Date de dépôt : **19.11.90**

(54) **Tuyau pour le transport de matières fortement abrasives.**

(30) Priorité : **22.11.89 BE 8901249**

(43) Date de publication de la demande :
**29.05.91 Bulletin 91/22**

(45) Mention de la délivrance du brevet :
**16.12.92 Bulletin 92/51**

(84) Etats contractants désignés :
**AT CH DE FR GB IT LI LU NL**

(56) Documents cités :
**EP-A- 0 037 358**
**DE-A- 2 263 710**

(73) Titulaire : **LOMAR N.V.**
**Aarschotsebaan 299**
**B-2590 Berlaar (BE)**

(72) Inventeur : **Loos, Joannes Henri**
**Aarschotsebaan 299**
**B-2590 Berlaar (BE)**

(74) Mandataire : **Debrabandere, René**
**Bureau De Rycker sa Arenbergstraat 13**
**B-2000 Antwerpen (BE)**

EP 0 429 426 B1

Jouve, 18, rue Saint-Denis, 75001 PARIS

## Description

L'invention a trait à un tuyau pour le transport de matières fortement abrasives, transportables, plus particulièrement des matériaux de construction, le tuyau possédant au moins une couche résistante à l'usure, de couleur foncée, élastique.

De tels tuyaux s'utilisent souvent pour le transport vers l'intérieur de matériaux comme des mortiers, plus particulièrement des mortiers de chape, et du sable, dont l'approvisionnement et la composition se font en dehors du bâtiment. Etant donné que ces matériaux sont fortement abrasifs, ces tuyaux doivent être très résistants à l'usure à l'intérieur. Ils doivent cependant également être très résistants à l'usure à l'extérieur, puisqu'ils frottent fréquemment, par exemple à cause des vibrations provoquées par une pompe ou du déplacement des tuyaux, contre des matériaux qui sont en général plutôt rugueux comme par exemple le béton ou la brique.

Il est donc généralement d'usage de fabriquer de tels tuyaux en grande partie à base de caoutchouc naturel ou de caoutchouc synthétique étant très résistants à l'usure, aussi bien à l'intérieur qu'à l'extérieur. La teneur en carbone de ce caoutchouc est élevée et la couleur est en général foncée jusqu'à noir.

De tels tuyaux sont relativement résistants à l'usure, mais ils ont le désavantage de laisser des traces foncées quand ils frottent contre des matériaux de construction.

Dans certains cas cela peut être très ennuyeux et indésirable. C'est par exemple le cas pour des murs blancs plâtrés. Les traces foncées laissées par un tuyau en frottant contre le mur, sont très difficiles à enlever et donnent, quand elles ne sont pas enlevées, des problèmes lors de la peinture du mur.

On peut remédier à ce problème en fabriquant le tuyau à base de caoutchoucs naturels ou de caoutchoucs synthétiques de couleur claire existants, mais ces caoutchoucs contiennent peu de carbone de sorte qu'ils ne sont pas résistants à l'usure.

L'invention a pour but de remédier à ces désavantages et de fournir un tuyau pour le transport de matières fortement abrasives qui, d'une part, est suffisamment résistant à l'usure afin d'être utilisé durant une période relativement longue mais qui, d'autre part, ne laisse pas de traces foncées ennuyeuses sur les matériaux contre lesquels il frotte.

A ces fins le tuyau est muni à l'extérieur d'une petite couche de revêtement élastique de couleur claire ou blanche.

Dans la mesure où le tuyau laisse des traces sur, par exemple, des murs ce sont des traces de couleur blanche ou claire qui sont sensiblement moins ennuyeuses que les traces foncées. Quand la petite couche de revêtement est usée, on peut continuer à utiliser le tuyau, mais l'avantage réalisé par l'invention est éliminé. Le tuyau est en fait à ce moment là l'équivalent d'un des tuyaux connus n'étant pas munis d'une petite couche de revêtement de couleur claire ou blanche. Si, par contre, on ne mettait pas de petite couche de revêtement additionnelle, mais si on fabriquait le tuyau en soi ou du moins la partie extérieure à base d'un caoutchouc pas très résistant à l'usure mais de couleur blanche ou claire, le tuyau en soi deviendrait très vite complètement inutilisable à cause de l'usure.

Dans une réalisation spéciale de l'invention le tuyau est muni d'une couche intérieure résistante à l'usure, élastique, d'une couche extérieure résistante à l'usure, de couleur foncée, élastique et d'une couche de renforcement entre les deux et de la petite couche de revêtement de couleur claire ou blanche autour de la couche extérieure.

Les tuyaux susdits connus sont pour la plupart munis d'une couche intérieure et d'une couche extérieure de caoutchouc naturel résistant à l'usure et par conséquent de couleur foncée, et d'une couche de renforcement composée de toile ou de corde entre les deux. Avec l'intention d'accorder une couleur blanche ou claire à l'extérieur du tuyau, on pourrait être tenté de fabriquer la couche extérieure du tuyau à base d'un caoutchouc naturel ou synthétique de couleur claire ou blanche. Etant donné qu'un tel caoutchouc n'est pas résistant à l'usure, un tel tuyau s'userait assez vite jusqu'à la couche de renforcement et deviendrait assez vite inutilisable.

Dans une réalisation préférentielle de l'invention, la petite couche de revêtement est fabriquée à base du même matériel que la couche extérieure mais sans le composant qui donne un aspect foncé à la couche extérieure.

L'épaisseur de la petite couche de revêtement est de préférence entre 0,1 et 1 cm.

D'autres caractéristiques et exemples de l'invention suivront dans la description ci-dessous d'un tuyau pour le transport de matières fortement abrasives, transportables, suivant l'invention.

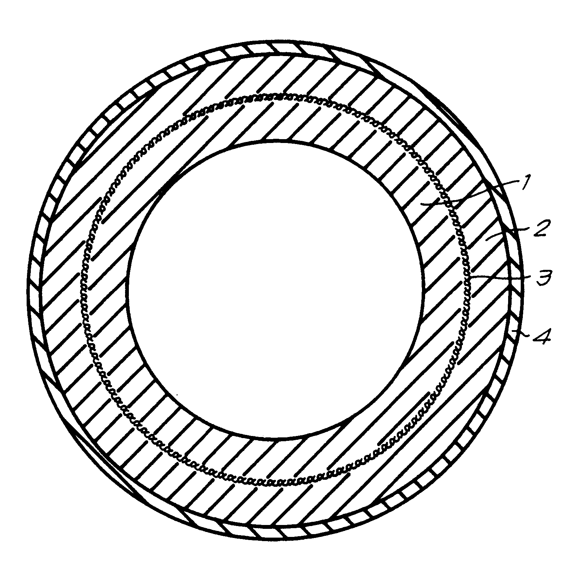

Cette description n'est donnée qu'en guise d'exemple et n'est pas restrictive. Les chiffres se réfèrent au dessin ci-inclus.

Le tuyau pour le transport de matières fortement abrasives, à pomper, en particulier des matériaux de construction tels que des mortiers et d'autres, suivant la figure, est muni d'une couche intérieure 1 à base de caoutchouc naturel ou de caoutchouc synthétique résistants à l'usure, d'une couche extérieure 2 ayant pratiquement la même épaisseur et également à base de caoutchouc naturel ou de caoutchouc synthétique résistants à l'usure et d'une couche de renforcement intermédiaire 3 composée de toile ou de corde tressée.

Les deux couches 1 et 2 ont une teneur en carbone élevée et sont de ce fait aussi très résistantes à l'usure. C'est ainsi qu'elles ont cependant une couleur foncée et même noire.

L'invention est caractérisée par le fait que la couche extérieure 2 est encore entourée d'une petite couche de revêtement moins épaisse élastique 4 également fabriquée à base de caoutchouc naturel ou synthétique, mais de couleur claire ou blanche.

La petite couche de revêtement peut être de couleur claire, par exemple de couleur blanche ou de ton pastel, par l'addition de substances.

Dans la mesure où le tuyau frottait contre un mur, par exemple un mur blanc plâtré, il ne laisserait que des traces de couleur blanche ou claire. Si plus tard le mur doit être peint, il y aurait moins de problèmes qu'en cas de traces noires résidentes. Il est vrai que la petite couche de revêtement 4 est moins résistante à l'usure que les couches 1 et 2, mais même si cette petite couche de revêtement est usée, on peut continuer à utiliser le tuyau de la même façon que les tuyaux connus sans petite couche de revêtement. Ainsi ce tuyau peut encore être utilisé dans des endroits où le problème de traces laissées sur des parties de la construction ne se pose pas, par exemple entre la pompe et le bâtiment en soi.

Le tuyau est exceptionnellement approprié au transport de mortiers, plus particulièrement des mortiers de chape. Le diamètre extérieur du tuyau se situe alors généralement entre 8 et 10 cm. La plupart du temps les mortiers sont transportés à travers le tuyau sous une pression de 7 à 15 kg/cm². Le transport se fait, dans le cas des mortiers, avant de souffler le mortier par les tuyaux à l'aide de compresseurs.

L'invention ne se limite nullement à la réalisation décrite ci-dessus, et dans le cadre de l'introduction de la demande de brevet, la réalisation décrite ci-dessus peut être modifiée, entre autres en ce qui concerne la forme, la composition, la disposition et le nombre d'éléments utilisés pour la réalisation de l'invention.

Plus particulièrement, le tuyau ne doit pas nécessairement comprendre une couche intérieure et extérieure et une couche de renforcement intermédiaire. Il peut aussi comprendre une seule couche qui est alors recouverte d'une petite couche de revêtement suivant l'invention.

Les couches du tuyau proprement dit, à l'exception de la petite couche de revêtement, ne doivent pas nécessairement être fabriquées à base de caoutchouc naturel. D'autres matériaux peuvent être appliqués suivant l'invention étant, par exemple, afin d'être suffisamment résistants à l'usure, de couleur foncée.

La couche extérieure aussi ne doit pas nécessairement être fabriquée du même matériel que les autres couches. Elle ne doit d'ailleurs pas nécessairement être fabriquée à base de caoutchouc naturel ou synthétique. Elle peut aussi être fabriquée, par exemple, à base de matière synthétique.

## Revendications

1. Tuyau pour le transport de matières fortement abrasives, à pomper, plus particulièrement des matériaux de construction, le tuyau possédant au moins une couche résistante à l'usure, de couleur foncée, élastique, (1,2), caractérisé en ce qu'il est recouvert à l'extérieur d'une petite couche de revêtement élastique, de couleur claire ou blanche (4).

2. Tuyau suivant la revendication précédente, caractérisé en ce qu'il comprend au moins une couche intérieure résistante à l'usure, élastique (1), une couche extérieure résistante à l'usure, de couleur foncée, élastique (2) et une couche de renforcement (3) entre les deux, et que la couche extérieure (2) est recouverte de la petite couche de revêtement de couleur claire ou blanche (4).

3. Tuyau suivant la revendication précédente, caractérisé en ce que la petite couche de revêtement (4) est fabriquée à base du même matériel que la couche extérieure (2), mais sans le composant qui lui donne un aspect foncé.

4. Tuyau suivant l'une des revendications 2 et 3, caractérisé en ce que la couche intérieure (1) est également une couche de couleur foncée.

5. Tuyau suivant la revendication précédente, caractérisé en ce que la couche intérieure (1) et la couche extérieure (2) sont fabriquées à base du même matériel.

6. Tuyau suivant l'une des revendications 2 à 5, caractérisé en ce qu'au moins la couche extérieure (2) enrobée par la petite couche de revêtement (4) est fabriquée à base de caoutchouc contenant du carbone.

7. Tuyau suivant les revendications 3 et 6, caractérisé en ce que la petite couche de revêtement (4) est fabriquée à base de caoutchouc qui toutefois ne contient pratiquement pas de carbone.

8. Tuyau suivant l'une des revendications 2 à 7, caractérisé en ce que la couche intermédiaire (3) est fabriquée à base de toile ou de corde.

9. Tuyau suivant l'une des revendications 1 à 8, caractérisé en ce que l'épaisseur de la petite couche de revêtement (4) se situe entre 0,1 et 1 cm.

10. Tuyau suivant l'une des revendications 1 à 9, caractérisé en ce qu'il est destiné au transport de mortiers, plus particulièrement de mortiers de chape.

## Patentansprüche

1. Schlauch zur Förderung von sehr abreibenden Werkstoffen besonders zum Pumpen von Baustoffen, wobei der Schlauch mindestens eine verschleißfeste, dunkelfarbige, elastische Schicht besitzt (1,2), dadurch gekennzeichnet, daß er äußerlich von einer dünnen, elastischen Verstärkungsschicht überzogen worden ist, in heller Farbe oder weiß (4).

2. Schlauch nach dem vorgehenden Anspruch, dadurch gekennzeichnet, daß er mindestens eine elastische, verschleißfeste Innenschicht (1) umfaßt, eine verschleißfeste, dunkelfarbige, elastische Außenschicht (2) und eine Verstärkungsschicht (3) zwischen den beiden, und daß die Außenschicht (2) überzogen ist mit einem dünnen Bezug in heller Farbe oder weiß (4).

3. Schlauch nach der vorgehenden Verwirklichung, dadurch gekennzeichnet, daß die dünne Verstärkungsschicht (4) aus dem gleichen Werkstoff hergestellt ist die Außenschicht (2) aber ohne die Komponente die sie ein dukles Aussehen gibt.

4. Schlauch nach einem der Ansprüche 2 und 3, dadurch gekennzeichnet, daß die Innenschicht (1) ebenfalls eine dunkelfarbige Schicht ist.

5. Schlauch nach dem vorgehenden Anspruch, dadurch gekennzeichnet, daß die Innenschicht (1) und die Außenschicht (2) aus dem gleichen Werkstoff hergestellt sind.

6. Schlauch nach einem der Ansprüche 2 bis 5, dadurch gekennzeichnet, daß mindestens die Außenschicht (2), umgeben von der dünnen Verstärkungsschicht (4), hergestellt ist aus Kohlenstoff enthaltendem Kautschuk.

7. Schlauch nach den Ansprüchen 3 und 6, dadurch gekennzeichnet, daß die dünne Verstärkungsschicht (4) hergestellt ist aus Kautschuk der aber praktisch keinen Kohlenstoff enthält.

8. Schlauch nach einem der Ansprüche 2 bis 7, dadurch gekennzeichnet, daß die Zwischenschicht (3) hergestellt ist aus Tuch oder Taugeflecht.

9. Schlauch nach einem der Ansprüche 1 bis 8, dadurch gekennzeichnet, daß die Stärke der dünnen Verstärkungsschicht (4) zwischen 0,1 und 1 cm liegt.

10. Schlauch nach einem der Ansprüche 1 bis 9, dadurch gekennzeichnet, daß er beabsichtigt ist zur Förderung von Mörteln, besonders Mörteln zur Abdeckung.

## Claims

1. Pipe for the transport of highly abrasive materials to be pumped, in particular building materials, whereby the pipe has at least one elastic, dark-coloured layer resistant to wear (1,2), characterized in that it is coated on the outside with a thin, elastic, pale or white cover (4).

2. Pipe according to the above claim, characterized in that it contains at least an elastic interior layer resistant to wear (1), an elastic, dark-coloured, exterior layer resistant to wear (2) and a reinforcement layer (3) between these two, and in that the exterior layer (2) is coated with the thin, white or pale-coloured cover (4).

3. Pipe according to the above claim, characterized in that the thin cover (4) is made of the same material as the exterior layer (2), but whereby the element which darkens it is left out.

4. Pipe according to any of claims 2 and 3, characterized in that the interior layer (1) is also a dark-coloured layer.

5. Pipe according to the above claim, characterized in that the interior layer (1) and the exterior layer (2) are made of the same material.

6. Pipe according to any of claims 2 to 5, characterized in that at least the exterior layer (2), coated with the thin cover (4) is made of rubber containing carbon.

7. Pipe according to claims 3 and 6, characterized in that the thin cover (4) is made of rubber which hardly contains any carbon.

8. Pipe according to any of claims 2 to 7, characterized in that the intermediate layer (3) is made of linen or cords.

9. Pipe according to any of claims 1 to 8, characterized in that the thin cover (4) is between 0.1 and 1 cm thick.

10. Pipe according to any of claims 1 to 9, characterized in that it is meant for the transport of mortar, in particular mortar for floor screeds.